# EUROPÄISCHE PATENTSCHRIFT

(11) **EP 3 230 001 B1**
(45) Veröffentlichungstag und Bekanntmachung des Hinweises auf die Patenterteilung: **18.08.2021**
(21) Anmeldenummer: 15800721.1
(22) Anmeldetag: 23.11.2015
(51) Int. Cl.: B23F 5/16, B23F 19/10, B23F 21/10

(54) **VERFAHREN ZUM BEARBEITEN EINER VERZAHNUNG, WERKZEUGANORDNUNG UND VERZAHNUNGSMASCHINE**
METHOD FOR MACHINING A SET OF TEETH, TOOL ARRANGEMENT, AND TOOTH-CUTTING MACHINE
PROCÉDÉ DE TRAITEMENT D'UNE DENTURE, ENSEMBLE D'OUTIL ET MACHINE À DENTURE

(30) Priorität: 10.12.2014 DE 102014018328
(43) Veröffentlichungstag der Anmeldung: 18.10.2017
(73) Patentinhaber: Gleason-Pfauter Maschinenfabrik GmbH, 71636 Ludwigsburg (DE)
(72) Erfinder: PHILIPPIN, Matthias, 71277 Rutesheim (DE); SCHMEZER, Ralf, 71634 Ludwigsburg (DE); GRILL, Joachim, 71636 Ludwigsburg (DE)
(74) Vertreter: Leinweber & Zimmermann
(86) Internationale Anmeldenummer: PCT/EP2015/002357
(87) Internationale Veröffentlichungsnummer: WO 2016/091356

(56) Entgegenhaltungen:
- DE-A1- 10 230 148
- DE-B1- 2 157 619
- US-A1- 2013 121 779
- US-B1- 7 377 731

## Beschreibung

Die Erfindung betrifft das Gebiet der ergänzenden Zahnformung und dabei speziell ein Verfahren gemäß dem Oberbegriff des Anspruchs 1 zum Bearbeiten einer Verzahnung, sowie eine dazu geeignete Werkzeuganordnung gemäß dem Oberbegriff des Anspruchs 11, eine Anfasstation und eine Verzahnungsmaschine gemäß dem Oberbegriff des Anspruchs 19. Ein derartiges Verfahren ist aus dem Dokument DE 2 157 619 B bekannt. Eine derartige Werkzeuganordnung und eine derartige Verzahnungsmaschine sind aus dem Dokument US 2013/0121779 A bekannt.

Verfahren zur ergänzenden Zahnformung sind bekannt, eine Übersicht findet sich in Thomas Bausch, "Innovative Zahnradfertigung", 3. Auflage, auf Seite 304. Ausgangspunkt der ergänzenden Zahnformung ist die Verzahnung nach ihrer Erzeugung beispielsweise durch das Wälzfräsen oder Wälzstoßen. So entstehen beim Wälzfräsen zunächst sogenannte Primärgrate entlang der Verzahnungsstirnkante, an der die Schneiden des Wälzfräsers austreten, wie sie z.B. in der Literaturstelle Bausch im Bild 8.1-1 oben Mitte auf Seite 304 abgebildet sind. Diese Grate sind scharfkantig und fest, zur Vermeidung von Verletzungen und zur Verbesserung der Verzahnungsgeometrie für den Folgeprozess sind sie zu entfernen. Dies geschieht üblicherweise durch fest stehende Entgratstähle, über mitlaufende Entgratscheiben oder Feilscheiben, und zwar üblicherweise unmittelbar im Zusammenhang mit dem Prozess der Verzahnungserzeugung.

Eine solche bloße Entfernung des Primärgrats beispielsweise durch Abdrehen wird den Anforderungen an die Qualität der Zahnkanten oftmals nicht gerecht. Deshalb wird an den Zahnkanten (Stirnkanten) üblicherweise eine Fase gebildet. In der Literaturstelle Bausch ist im Bild 8.1-1 links oben die Stirnkante mit B bezeichnet und im Bild rechts oben mit der daran erzeugten Fase für eine Geradverzahnung gezeigt. Im Falle von Schrägverzahnungen ergeben sich bei den Fasen zwischen den Flankenlinien und der Stirnschnittebene auf der einen Seite ein stumpfer und auf der anderen Seite ein spitzer Winkel. Die Geometrien der Fasen (Fasenparameter) lassen sich beispielsweise wiedergeben durch den Fasenwinkel, also den Winkel zwischen der Orientierung der Fase zur Stirnschnittebene, und der Größe der Fase, die sich beispielsweise dadurch angeben läßt, wie weit die Fase von der Stirnseite normal zur Stirnseite in die Zahnflanken hineinragt, oder auch über die Fasenbreite. Dies geschieht üblicherweise durch geeignete, diese Informationen beinhaltenen Toleranzfelder für die Fase.

Es gibt Verfahren, bei denen die Fase durch Schneiden erzeugt wird. So zeigt die DE 10 2009 019 433 eine Anfaseinrichtung mit einem Schneidrad. Die Schneidradachse ist um 180° schwenkbar, so daß der Schnitt am oberen und unteren stirnseitigen Ende der Verzahnung immer von innen nach außen erfolgen kann, mit nur einem bevorzugt verhältnismäßig klein dimensionierten Werkzeug.

Geläufiger sind jedoch Verfahren, bei denen mit verzahnten Anfaswerkzeugen eine plastische Umformung der Zahnkanten durch Drücken im wälzenden Bearbeitungseingriff erfolgt. Das Material der Zahnkante wird dabei plastisch verformt, verdichtet und verdrängt. Dabei kann es zu einem Materialfluß in Richtung der Zahnflanken, aber auch der Stirnkanten kommen; die dadurch hervorgerufenen Materialaufwürfe werden als Sekundärgrate bezeichnet. Diese Technologie ist in der Literaturstelle Bausch auf den Seiten 308 und 309 beschrieben, im Bild 8.2-5 sind diesbezüglich geeignete Werkzeuge abgebildet; im Übrigen sind derartige Verfahren auch in der EP 1 270 127 beschrieben. Es sind auch Verfahren bekannt, wie das in der WO 2009/017248 beschriebene, bei denen die Materialverdrängung gezielt mehr zur Stirnseite und weniger zur Zahnflanke hin gerichtet wird.

Im Übrigen sind auch Maßnahmen zur Entfernung der ebenfalls ungewünschten Sekundärgrate ebenfalls gut bekannt. Die Materialaufwürfe auf den Zahnflanken können beispielsweise geglättet werden oder in einem weiteren Frässchnitt entfernt werden, die stirnseitigen Aufwürfe können abgedreht werden oder beispielsweise mit der Feilscheibe entfernt werden.

DE 2157619 B1 offenbart eine Vorrichtung zum Brechen der Kanten von Zahnrädern mit einem zahnradförmigen Schneidwerkzeug und eine Anordnung mit zwei Schneidradwerkzeugen und einem dazwischen angeordneten Führungsrad.

DE 10230148 A1 offenbart das Anfasen von Verzahnungen mit einem Wälzfräser.

US 2013/0121779 A1 offenbart die Bearbeitung von Zahnkanten eines Werkstücks mit Schneidzähnen, deren helixartige Orientierung zur Drehachse wie bei einem Wälzfräser ist, die jedoch wie bei einem Fly Cutter auf einem gemeinsamen Flugkreis liegen.

US 7,377,731 B1 offenbart das Anfasen von Verzahnungen mit einer Schleifscheibe.

Der Erfindung liegt die Aufgabe zugrunde, ein Verfahren zur Bildung einer Fase an einer Stirnkante einer Verzahnung bereitzustellen, mit dem zuverlässig Fasen hoher Qualität und mit nur geringen Toleranzen gegenüber gewünschten Fasenformen erzeugbar sind.

Diese Aufgabe wird von der Erfindung in verfahrenstechnischer Hinsicht durch ein Verfahren mit den Merkmalen von Anspruch 1 erreicht.

Erfindungsgemäß werden somit verzahnte Bearbeitungswerkzeuge eingesetzt, die in einem Bearbeitungseingriff effektiv nur die eine der beiden zu einer Zahnlücke gehörenden Zahnstirnkanten der gleichen Stirnseite bearbeiten. Das "nicht über den Zahngrundbereich hinaus" ist daher so zu verstehen, daß es bei dem Bearbeitungseingriff durchaus noch zu einer Fasenbildung am Zahnfuß kommen kann und gegebenenfalls auch noch einen Bearbeitungskontakt über die Zahnlückenmitte hinaus im Fußbereich geben darf, eine Fasenbildung an der gegenüberliegenden Stirnkante allerdings nicht mehr erfolgt. Diese kann vielmehr gemäß einer bevorzugten Ausführungsform der Erfindung in einem nachfolgenden anderen Bearbeitungseingriff erfolgen.

Da es sich um einen wälzenden Bearbeitungseingriff mit rotierendem Bearbeitungswerkz ug und rotierender Verzahnung handelt, können alle Stirnkanten der Verzahnung, beispielsweise die der linken Zahnflanken der Zahnlücken, in einem Durchlauf im gleichen Bearbeitungseingriff bearbeitet werden. Die Maschinenachs- und Schneidkinematik ist aufgrund des Achskreuzwinkels zwischen den jeweiligen Rotationsachsen diejenige des Wälzschälens (Power Skiving), die dem Fachmann der Verzahnungstechnologie grundsätzlich aus den Bereichen der Verzahnungserzeugung bzw. der Feinbearbeitung (Hartschälen) bekannt ist. Einen guten Einstieg und Überblick über diese Kinematik und die dadurch hervorgerufenen Schneidprozesse gibt die EP 2 537 615. In der DE 10 2013 012 797 A1 ist beschrieben, wie ein Schälrad, welches grundsätzlich zum Wälzschälen von Verzahnungen ausgelegt ist, durch einen zusätzlich zum Achskreuzwinkel eingeführten Kippwinkel eine Schnittrichtungskomponente orthogonal zu den Zahnflanken erreicht, so daß im Einsatz dieses Schälrades nahe der Stirnseite gleichzeitig an beiden gegenüberliegenden Zahnflanken einer Zahnlücke eine Fase generiert wird.

Insbesondere für Verzahnungen schrägverzahnter Werkstücke mit den oben erläuterten spitzen und stumpfen Fasenwinkeln wird es bevorzugt, daß der andere Bearbeitungseingriff mit einem anderen Bearbeitungswerkzeug vorgenommen wird. In diesem Zusammenhang wird der andere Bearbeitungseingriff bevorzugt auch unter einem anderen Achskreuzwinkel ausgeführt.

Erfindungsgemäß bestimmt man noch vor der Bearbeitung der Fase aus vorgegebenen Fasenparametern für die Fase (beispielsweise erhältlich aus den oben erläuterten Toleranzfeldern) betreffend deren Größe und deren Orientierung zur Stirnseite sowie aus Verzahnungsparametern der zu bearbeitenden Verzahnung betreffend deren Profil und gegebenenfalls Schrägungswinkel erste Verzahnungsdaten einer ersten Verzahnung, deren Schrägungswinkel durch die Orientierung der Fase bestimmt ist und deren Stirnschnittprofil mit dem der zu bearbeitenden Verzahnung im Übergang von der Zahnflanke in die zu bildende Fase der Zahnkante übereinstimmt. Gleichermaßen kann an der anderen Zahnkante vorgegangen werden und können auf diese Art und Weise für die andere Stirnkante mit Fase zweite Verzahnungsdaten einer zweiten Ersatzverzahnung bestimmt werden.

In dieser Betrachtungsweise sieht man die Fase der Stirnkante somit in einer völlig anderen Bedeutung, nämlich als Zahnflanke einer virtuellen Ersatzverzahnung sehr geringer Verzahnungsbreite. Das jeweilige Profil dieser Ersatz(Schräg-)-Verzahnung läßt sich daraus im Wege der üblichen Mittel zur Zahnformbestimmung modellieren. In einer gemeinsamen Stirnschnittebene am Übergang der Zahnflanken der tatsächlich zu erzeugenden Verzahnung zur Fase der zu erzeugenden Verzahnung (gemeinsame Stirnschnittebene) gibt es an den beiden Flanken jeweils Übereinstimmungen mit der zugehörigen Ersatzverzahnung. Die Fasenorientierung der zu bearbeitenden Verzahnung gibt dabei die Information über den Schrägungswinkel für die jeweilige Ersatzverzahnung an beiden Seiten.

Weiter ist erfindungsgemäß vorgesehen, daß die Auslegung des Bearbeitungswerkzeugs in Abhängigkeit von den ersten Verzahnungsdaten vorgenommen wird und das Bearbeitungswerkzeug ein zur Erzeugung der ersten Ersatzverzahnung durch Wälzschälen ausgelegtes Schälrad ist, wobei man zur Auslegung des anderen Bearbeitungswerkzeuges analog vorgehen kann und dabei auf die zweiten Verzahnungsdaten zurückgreift.

In dieser Anschauungsweise wird somit nicht irgendwie Material von den Zahnkanten abgeschnitten, sondern es wird eine neue Schrägverzahnung in dem Bereich nahe der Stirnseite erzeugt, deren Zahnflanken für die bereits erzeugte Verzahnung wie eine Fase erscheinen. Auf diese Weise lassen sich sehr präzise Fasen erzeugen, die sich wiederholsicher auch im Toleranzbereich enger Toleranzen befinden. Insoweit die Toleranzfelder für die Fasen enger sind als eine Toleranz in der Breite der verzahnten Werkstücke, wird es bevorzugt vorgesehen, die Abweichung der Verzahnungsbreite von einem Sollwert für jede zu bearbeitende Verzahnung zu erfassen (beispielsweise sensorisch über Abstandsmessungen oder optische Mittel) und die Maschinenachsen für die zum Bearbeitungseingriff erforderlichen Relativbewegungen in Abhängigkeit von dieser Abweichung zu steuern.

Dieser Aspekt der Erfindung wird auch als eigenständig offenbart und schutzwürdig angesehen, unabhängig davon, in welcher Kinematik Bearbeitungseingriffe zur Bildung der Fase vorgenommen werden. So ist als eigenständig schutzwürdig offenbart ein Verfahren zur Bildung einer Fase an einer zwischen einer Stirnseite einer Verzahnung und einer zu einer Zahnlücke der Verzahnung gehörigen Zahnflanke ausgebildeten Zahnkante, bei dem man aus vorgegebenen Fasenparametern für die Fase betreffend deren Größe und deren Orientierung zur Stirns ite sowie aus Verzahnungsparametern der zu bearbeitenden Verzahnung betreffend deren Profil und gegebenenfalls Schrägungswinkel Verzahnungsdaten einer Ersatzverzahnung bestimmt, deren Schrägungswinkel durch die Orientierung der Fase bestimmt ist und deren Stirnschnittprofil mit dem der zu bearbeitenden Verzahnung im Übergang von der Zahnflanke in die zu bildende Fase der Zahnkante übereinstimmt und bei dem eine Auslegung des Bearbeitungswerkzeuges für die Bildung der Fase in Abhängigkeit von den Verzahnungsdaten vorgenommen wird.

In einer bevorzugten Verfahrensgestaltung weisen das Bearbeitungswerkzeug und das andere Bearbeitungswerkzeug eine gemeinsame, insbesondere um mehr als 180° verschwenkbare Rotationsachse auf. Durch Verschwenken der Rotationsachse um 180° und entsprechende Linearpositionierungen können die beiden Bearbeitungswerkzeuge dann auch die Fasen an der anderen Stirnseite der Verzahnung in der gleichen Weise erzeugen wie an der einen Stirnseite. Pro Stirnseite werden somit zwei Positionen angefahren, die den jeweiligen Bearbeitungseingriffen entsprechen, woraus sich insgesamt pro Verzahnung vier Positionierungen ergeben. Diese lassen sich wie auch die Auslegung der Bearbeitungswerkzeuge vorab berechnen.

Das Bearbeitungswerkzeug und/oder das andere Bearbeitungswerkzeug können als geradverzahnte Schälräder ausgebildet werden, wodurch sich deren Herstellung vereinfacht. In diesem Zusammenhang ist vorgesehen, daß der Achskreuzwinkel des Bearbeitungseingriffes / anderen Bearbeitungseingriffes des Bearbeitungswerkzeugs / anderen Bearbeitungswerkzeugs auf den Schrägungswinkel der ersten/zweiten Ersatzverzahnung eingestellt wird/werden. Die dazu erforderlichen Positionierungen, wie auch Verfahrwege, Ein- und Überlaufwege, Drehzahlen und Vorschübe lassen sich ebenfalls bereits vor der Bearbeitung über eine Software simulieren.

Wie für das Erhalten der für das synchrone Koppeln der Werkzeuge mit der Verzahnung erforderlichen korrekten Wälzstellungen üblich, können die Positionen der Werkzeugschneiden wie auch die Positionen der Verzahnung des Werkstückes exakt vermessen und der Steuersoftware zur Verfügung gestellt werden. Dazu können aus dem Stand der Technik bekannte Einzentrieroperationen durchgeführt werden, das sogenannte Einmitten. Die Position der Werkstückverzahnung, insbesondere die Höhenlage der beiden Stirnflächen, können auch außerhalb des Ortes der eigentlichen Bearbeitung erfaßt werden, beispielsweise indem das Werkstück bereits auf inem definierten Werkstückträger angeordnet ist und mit diesem in die Bearbeitungsstation geladen wird. Gleiches gilt für die bereits oben angesprochene Bestimmung der Höhenlagen der Stirnflächen der Verzahnung des Werkstückes, die ebenfalls innerhalb oder außerhalb des Ortes der eigentlichen Bearbeitungsposition bestimmt werden kann.

In einem weiteren Verfahrensaspekt ist es auch denkbar, einen von Null verschiedenen Kippwinkel zwischen der Rotationsachse des Bearbeitungswerkzeuges und einer orthogonal zur Verbindungsrichtung zwischen den Zentren von Verzahnung und Bearbeitungswerkzeug stehenden Ebene einzustellen. Dazu ist maschinenseitig keine zusätzliche Drehachse erforderlich, vielmehr läßt sich eine solche Relativlage zwischen Werkstückverzahnung und Bearbeitungswerkzeug durch Linearachspositionierungen erreichen, indem ein Offset in der orthogonal zur Verzahnungsachse stehenden Ebene vorgenommen wird. Auf diese Weise erhält man eine zusätzliche Einflußmöglichkeit auf die Form der zu bildenden Fasen, die es im gewissen Maße erlaubt, Bearbeitungswerkzeuge für eine vorgegebene Ersatzverzahnung auszulegen und mit diesen durch entsprechende Korrekturbewegungen der Maschinenachsen Fasen zu erzeugen, die in der oben erläuterten Betrachtungsweise zu von der Ersatzverzahnung abweichenden Verzahnungen führen. In vorrichtungstechnischer Hinsicht wird die Aufgabe gelöst durch eine Werkzeuganordnung mit den Merkmalen von Anspruch 11. Diese ist eine Anordnung zur Bildung einer Fase an den zwischen einer Stirnseite einer Verzahnung und deren Zahnflanken ausgebildeten Zahnkanten. Die Werkzeuganordnung ist somit eine spezielle Anordnung unterschiedlich ausgelegter Schälräder.

Die Vorteile der erfindungsgemäßen Werkzeuganordnung ergeben sich aus den Vorteilen des erfindungsgemäßen Verfahrens. Wie bereits erläutert, kann eine Vereinfachung erreicht werden, indem das erste und/oder das zweite Bearbeitungswerkzeug geradverzahnt ist. Zudem kann vorteilhaft vorgesehen werden, daß das erste/zweite Bearbeitungswerkzeug in Form eines zylindrischen Schälrads gebildet ist, sich die Kopfkreisdurchmesser der Werkzeuge um nicht mehr als 15 %, bevorzugt nicht mehr als 10 %, insbesondere nicht mehr als 5 % unterscheiden, die Bearbeitungswerkzeuge ohne Spanbrustwinkel gebildet sind und/oder die Bearbeitungswerkzeuge ohne Hinterschliff gebildet sind. Die und/oder-Kombination zeigt hier an, daß jedes einzelne Merkmal dieser Aufzählung für sich genommen vorteilhaft sein kann, diese aber auch kombiniert eingesetzt werden können. Hierdurch ergeben sich Vorteile beim einfacher gewordenen Nachschliff der Schälräder; bei zylindrischer Form verändert sich auch die radiale Lage der Zähne zur Werkzeugspindel nicht, wenn nachgeschliffen wird.

Insbesondere wird es bevorzugt, daß eine Spanfläche der Bearbeitungswerkzeuge insbesondere eine direkte Anlagefläche auf der Werkzeugspindel ist. Indem somit nach jedem Nachschliff die Spanfläche wieder als Anlagefläche auf der Werkzeugspindel dient, verändert sich die axiale Lage der Schneidkante zur Werkzeugspindel nicht. Auf diese Weise wird das Einrichten der Anfaseinheit und ihr Betrieb erheblich vereinfacht.

Dieser Aspekt wird von der Erfindung auch als eigenständig schutzwürdig offenbart. Die Erfindung betrifft somit ebenfalls den Einsatz eines insbesondere zylindrischen Schälrades zur Bildung einer Fase an einer zwischen einer Stirnseite und einer Zahnflanke einer Verzahnung ausgebildeten Zahnkante in einer Anordnung, bei der eine Spanfläche des Schälrads eine direkte Anlagefläche auf der Werkzeugspindel ist, so daß sich die axiale Lage der Schneidkante zur Werkzeugspindel auch nach einem Nachschliff nicht ändert.

Ansonsten können natürlich auch hinterschliffene Schälräder eingesetzt werden, auch Schälräder mit Spanbrustwinkel oder schrägverzahnte Schälräder, wie auch Schälräder mit Treppenschliff oder Kombinationen daraus.

In einer weiteren bevorzugten Ausführungsform ist ein gemeinsamer Antrieb für beide Bearbeitungswerkzeuge vorgesehen, wobei die Antriebskraft insbesondere zwischen den Bearbeitungswerkzeugen eingebracht werden kann. Der Antrieb kann beispielsweise ein Riementrieb oder ein Direktantrieb sein. Auf diese Weise ergibt sich eine kompakte und energieeffiziente Form der Werkzeuganordnung.

In diesem Zusammenhang sollen die Brustseiten mit den Schneidkanten der Bearbeitungswerkzeuge einander zugewandt oder voneinander abgewandt sein, insbesondere einander zugewandt. Ein Abstand zwischen den Bearbeitungswerkzeugen wird dabei ausreichend groß eingestellt, um eine Kollision des anderen Bearbeitungswerkzeugs mit der Verzahnung während des Bearbeitungseingriffes des einen Bearbeitungswerkzeuges zuverlässig zu vermeiden.

Eine Anfasstation gemäß Anspruch 18 mit einer derartigen Werkzeuganordnung weist eine, bevorzugt wenigstens zwei, insbesondere wenigstens drei linear unabhängige lineare Maschinenachsen zur Positionierung der Werkzeuganordnung bezüglich einer Werkstückposition auf.

Schließlich wird von der Erfindung noch eine Verzahnungsmaschine gemäß dem unabhängigen Anspruch 19 unter Schutz gestellt, mit einer Werkstückspindel zur drehend antreibbaren Aufnahme eines Werkstückes, einem Primärwerkzeug zur Erzeugung einer Verzahnung an dem Werkstück und einer Maschinenachse zur Einstellung eines Achskreuzwinkels zwischen einem verzahnten Bearbeitungswerkzeug zur Bildung einer Fase an einer zwischen einer Stirnseite der Verzahnung und einer zu einer Zahnlücke der Verzahnung gehörigen Zahnflanke ausgebildeten Zahnkante, die im wesentlichen gekennzeichnet ist durch eine Steuereinrichtung, die dazu programmiert ist, auf der Verzahnungsmaschine ein Verfahren nach einem der Ansprüche 1 bis 10 ablaufen zu lassen, und/oder eine Anfasstation mit einer Werkzeuganordnung nach Anspruch 18.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigt:
- Fig. 1: eine Schnittansicht durch eine Verzahnung und Normalschnittprofile der Verzahnung und zweier virtueller Ersatzverzahnungen zeigt,
- Fig. 2: eine Werkzeuganordnung mit zwei Anfasschälrädern zeigt,
- Fig. 3: eine Lagebeziehung zwischen den Drehachsen von Verzahnung und Schälrad zeigt, und
- Fig. 4: eine andere Lagebeziehung von den Drehachsen der Verzahnung und des Schälrads zeigt.

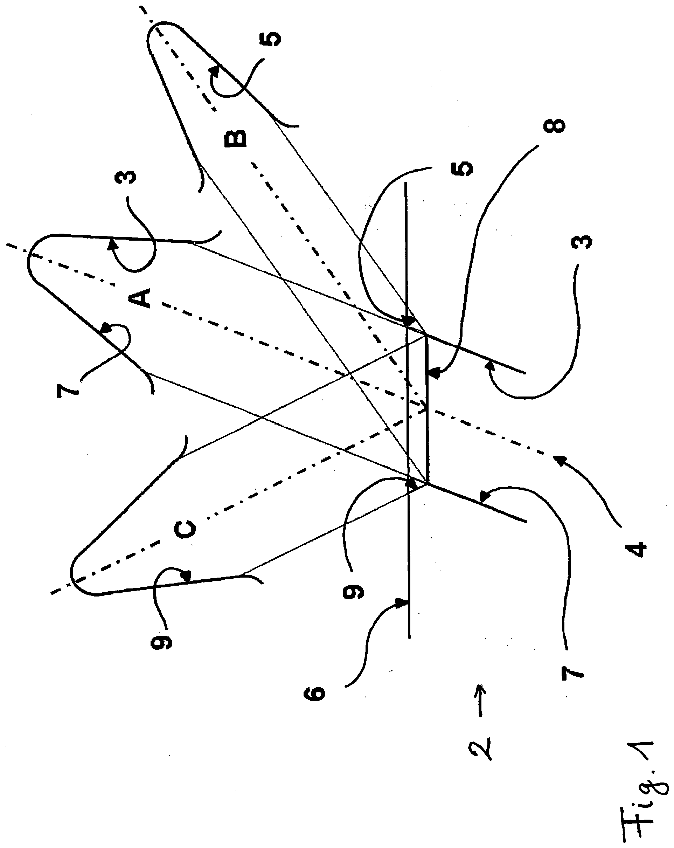

Im unteren Bereich von Fig. 1 ist eine Axialschnittansicht einer Verzahnung 2 gezeigt, wobei die Schnittebene durch zwei Zähne der Verzahnung 2 gelegt ist, zwischen deren einander zugewandten Zahnflanken 3 und 7 die Zahnlücke 4 liegt. Die Schnittebene steht somit orthogonal zur Stirnseite 6 und liegt parallel zur Verzahnungsachse Z2 der Verzahnung 2.

Im oberen Bereich von Fig. 1 ist das Normalschnittprofil der Verzahnung 2 dargestellt und die Verzahnung 2 mit A bezeichnet.

Da die Verzahnung 2 eine Schrägverzahnung ist, ist zwischen der Zahnflanke 3 und der Stirnseite 6 ein stumpfer Winkel gebildet, während zwischen der Zahnflanke 7 und der Stirnseite 6 ein spitzer Winkel gebildet ist. Dies führt zu unterschiedlichen Orientierungen der an der Stirnkante der Zahnflanke 3 zu bildenden Fase 5 und der an der Stirnkante der Zahnflanke 7 zu bildenden Fase 9, die ebenfalls in Fig. 1 unten eingezeichnet sind. Diese Orientierungen wie auch die Fasengröße, hier gemessen als Abstand der Stirnseite 6 zu einer Stirnschnittebene 8, an der die Zahnflanken 3, 7 in die Fasen 5, 9 übergehen, sind vorgegeben, beispielsweise im Rahmen der oben erläuterten Toleranzfelder. Die Verzahnung 2 mit den Fasen 5 und 9 ist somit definiert durch einerseits die Verzahnungsparameter für die Erzeugung der Verzahnung, zu denen das Normalschnittprofil von A zählt, wie auch den Schrägungswinkel ß der Verzahnung, und die Fasenparameter der Fasen 5 und 9, zu denen deren Orientierung zur Stirnschnittebene und deren Fasengröße zählt. Das Profil von Verzahnung A kann beispielsweise ein Evolventenprofil sein; die Verzahnungsparameter der Verzahnung 2 könnten beispielsweise sein: Modul = 5 mm, Eingriffswinkel = 20°, Schrägungswinkel ß = 25° sowie Profilverschiebungsfaktor von 0,17.

Nunmehr wird die Verzahnung 2 nur noch in dem Bereich zwischen der Stirnschnittebene 8 und der Stirnseite 6 betrachtet, also eine nur noch "dünne" Scheibe der Verzahnung 2, deren Breite durch die Fasengröße bestimmt ist. In dieser dünnen Scheibe wird das Normalschnittprofil für beide Seiten der Lücke bestimmt, die im Wortlaut der Ansprüche virtuelle Ersatzverzahnungen B, C darstellen. Aufgrund der zu bildenden Fasen 5, 9 ergeben sich für diese Ersatzverzahnungen B, C unterschiedliche Verzahnungsdaten.

In Fig. 1 dargestellt ist das Normalschnittprofil der zur Seite der Fase 5 bestimmten Ersatzverzahnung B und das der zur Fase 9 gehörigen Ersatzverzahnung C. Konkret ergeben sich für das Ausführungsbeispiel für die Ersatzverzahnung B ein Modul von 3,472 mm, ein Schrägungswinkel von 55,09° rechts und ein Profilverschiebungsfaktor von -2,915, während die Verzahnungsdaten für die Ersatzverzahnung C sind: Modul 5,162 mm, Schrägungswinkel 19,91° links, Profilverschiebungsfaktor 0,291. In der Stirnschnittebene 8 gehen an der Seite der Zahnflanke 3 die Stirnschnittprofile von A und B ineinander über, zur Seite der Zahnflanke 7 die Stirnschnittprofile von A und C.

Gemäß dieser Betrachtungsweise ist die Verzahnung 2 mit den Fasen 5 und 9 somit zusammengesetzt aus dem Bereich zwischen der Stirnseite 6 und der Stirnschnittebene 8 der Verzahnung B zur Seite der Fase 5 und der Verzahnung C zur Seite der Fase 9 sowie dem daran anschließenden Bereich bis zur anderen Stirnseite (bzw. den dort gebildeten Fasen), der Verzahnung A. Die Bildung der Fasen 5, 9 wird nun erreicht, indem man Schälräder auslegt, wobei die Auslegung derart erfolgt, daß mit diesen Schälrädern die Ersatzverzahnungen B bzw. C in der Wälzschälkinematik hergestellt werden könnten. Geht man nun von einer bereits erzeugten Verzahnung 2 aus, die Verzahnung A entspricht und noch keine Fasen an den Stirnkanten gebildet hat, erfolgt mit den so für die Verzahnungen B bzw. C ausgelegten Schälrädern nacheinander die Fasenbildung der Fase 5 und der Fase 9 unter den kinematischen Gegebenheiten des Wälzschälens.

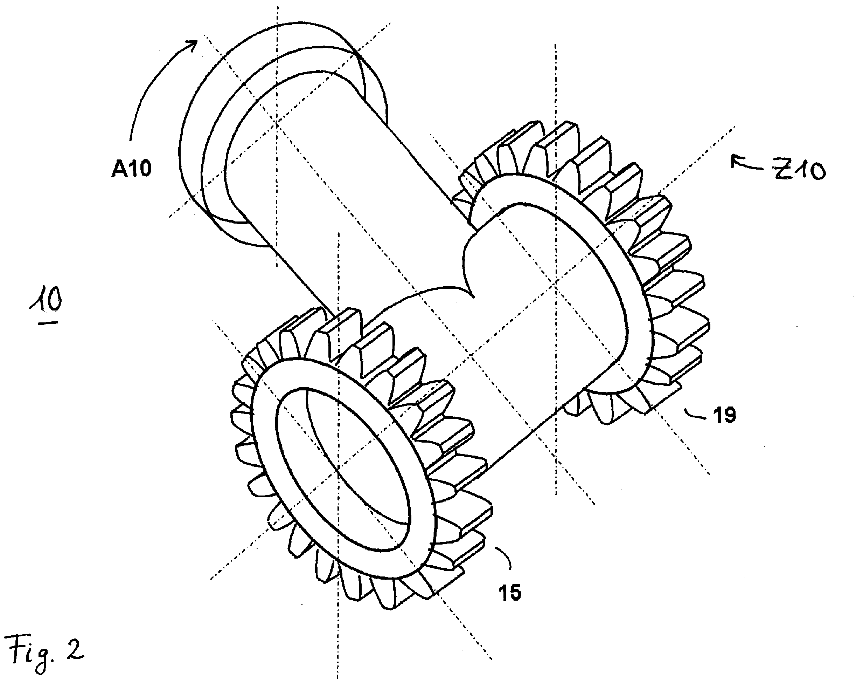

In Fig. 2 ist in einer perspektivischen Ansicht eine Werkzeuganordnung 10 dargestellt. Ein CNC-gesteuerter Antrieb, hier ein nicht dargestellter Riementrieb der Werkzeuganordnung 10, treibt deren einzige Werkzeugspindel an, deren Spindelachse die Werkzeugdrehachse Z10 der Schälräder 15 und 19 definiert, die mit ihren einander zugewandten Spanflächen unmittelbar an der Werkzeugspindel anliegen. Zudem ist die Werkzeuganordnung 10 um eine Schwenkachse A10 schwenkbar in einer Anfasstation zu lagern, so daß die Anfasschälräder 15, 19 die in Fig. 2 dargestellten Positionen tauschen können und für die Bearbeitung auf einen gewünschten Achskreuzwinkel zur Verzahnungsachse Z2 eingestellt werden können.

Die Werkzeugspindel nimmt somit beide Anfasschälräder 15, 19 gleichzeitig auf, doch nur jeweils eines der beiden Schälräder 15, 19 steht jeweils im Bearbeitungseingriff mit der Verzahnung 2.

Sowohl das eine Anfasschälrad 15, das zur Erzeugung der Fase 5 vorgesehen ist, als auch das Anfasschälrad 19, das zur Erzeugung der Fase 9 vorgesehen ist, sind einfach gestaltet in Form von geradverzahnten, zylindrischen Stirnrädern, deren Zähne an der Brustseite der Schälräder jedoch in Fig. 2 nicht dargestellt sind. Nach jedem Nachschliff dienen die Spanflächen wiederum als Anlagefläche auf der Werkzeugspindel, so daß sich die axiale Lage der Schneidkante zur Werkzeugspindel nicht ändert. Zudem verändert sich aufgrund der zylindrischen Form der geraden Schälradzähne auch die radiale Lage der Zähne zur Werkzeugspindel nicht. Entsprechend einfach wird das Einrichten der Anfasstation und deren Betrieb.

Es versteht sich, daß die Gestaltung der Werkzeuganordnung mit den Anfasschälrädern 15 und 19 wie oben beschrieben nur beispielhaft ist und daß natürlich auch die Möglichkeit besteht, geschliffene Schälräder einzusetzen, oder Schälräder mit Spanbrustwinkel, wie auch schrägverzahnte Schälräder oder auch Schälräder mit Treppenschliff, sowie Kombinationen daraus.

Die Maschinenachsen einer diese Werkzeuganordnung 10 umfassenden Anfasstation bestehen somit in der Drehachse Z10, die von dem CNC-gesteuerten Antrieb synchron zur Rotation der Verzahnungsachse Z2 des Werkstücks betrieben werden kann, sowie aus der Schwenkachse A10. Des Weiteren ist die Werkzeuganordnung 10 über eine für die Achse A10 verantwortliche Schwenkeinheit beispielsweise über Kreuzschlittenanordnungen noch über drei Linearachsen (X, Y, Z) gegenüber der Werkstückposition positionierbar. So kann eine Linearbewegungsachse Z für eine Bewegung parallel zur Verzahnungsachse Z2 konfiguriert sein, eine Linearachse X für eine radiale Zustell- oder Eintauchbewegung und eine Linearachse Y für eine tangentiale weitere lineare unabhängige Bewegungsachse sorgen. Die Anfasstation erhält somit ähnliche Maschinenachsen wie beispielsweise Primärwerkzeuganordnungen (etwa mit Wälzfräser) üblicherweise aufweisen.

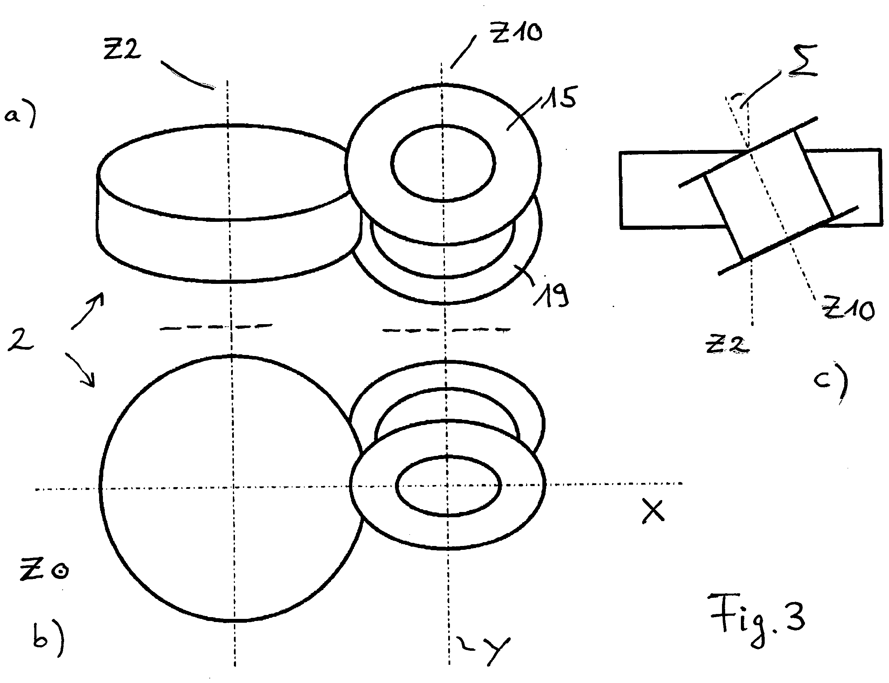

In Fig. 3 ist die relative Lage der Drehachsen Z2 der Verzahnung 2 und Z10 eines der Anfasschälräder 15 oder 19 in einer einfachsten Variante in einer perspektivischen Ansicht (Fig. 3a), einer Draufsicht (Fig. 3b) und einer Ansicht von hinten (Fig. 3c), Blickrichtung X dargestellt. Dadurch wird eine Ebene E1 definiert, in der die Drehachse Z2 der Verzahnung 2 wie auch der Werkzeugmittelpunkt des Anfasschälrads 15 (19) liegen. Der Achskreuzwinkel Σ ergibt sich aus einer Ebene E2, die orthogonal zur Ebene E1 steht und durch den Werkzeugmittelpunkt geht; es handelt sich um den Winkel zwischen der Schnittachse der Ebenen E1 und E2 und der Werkzeugdrehachse Z10. In diesem Ausführungsbeispiel ist das Anfasschälrad geradverzahnt ausgeführt und der Achskreuzwinkel Σ wird auf den Schrägungswinkel ß der jeweiligen Ersatzverzahnung eingestellt, d.h. im Bearbeitungseingriff des Anfasschälrads 15 zur Bildung der Fase 9 wird der Achskreuzwinkel auf den Schrägungswinkel der Ersatzverzahnung C eingestellt (Σ = β_{C}); analog erfolgt im Bearbeitungseingriff des Anfasschälrads 19 zur Bildung der Fase 5 die Bearbeitung unter einem Achskreuzwinkel, der auf den Schrägungswinkel der Ersatzverzahnung B eingestellt ist (Σ = β_{B}). Unter ausgleichenden Korrekturen ließe sich auch mit Σ ≠ β_{C} arbeiten.

Arbeitet beispielsweise in der Darstellung von Fig. 3 das Anfasschälrad 15 zur Bildung der Fase 9 in einer Einflankenbearbeitung, so kann anschließend nach Rückzug des Anfasschälrads 15 das Anfasschälrad 19 in Bearbeitungseingriff mit der Zahnflanke 3 zur Bildung der Fase 5 gebracht werden, indem über die Schwenkachse A10 der passende Achskreuzwinkel β_{B} eingestellt wird und über die Positionierachsen X, Y, Z die für den Bearbeitungseingriff erforderlichen Positionierbewegungen getätigt werden. Aufgrund des zwischen den Anfasschälrädern 15 und 19 vorgesehenen axialen Abstandes besteht keine Kollisionsgefahr des jeweils nicht arbeitenden Anfasschälrads mit der Verzahnung 2.

Anschließend kann eine entsprechende Bearbeitung an der anderen Stirnseite der Verzahnung 2 in analoger Weise erfolgen, wobei die Positionierachse Z für die richtige Höhenlage sorgt und aufgrund der Schwenkbarkeit der Schwenkachse A10 die beiden Anfasschälräder 15, 19 ihre Rollen tauschen können, da an der anderen Stirnseite die Zahnflanke 3 den spitzen Winkel bildet und die Fase 9 erhält, während die Zahnflanke 7 einen stumpfen Winkel mit der anderen Stirnseite einnimmt und die Fase 5 erhält.

Für die Bearbeitungen sind die korrekten Wälzstellungen der Anfasschälräder mit der Verzahnung 2 des Werkstückes einzuhalten. Zudem ist je nach Anforderungen an die Genauigkeit zur Erzielung der korrekten Fasengröße die Höhenlage der Stirnflächen 6 der Verzahnung exakt zu bestimmen.

Wie weiter oben bereits erläutert, werden dazu hinsichtlich der synchronen Wälzbewegungen Einmittoperationen ausgeführt. Sofern allerdings die Drehlage der Anfasschälräder bekannt ist und kein Aufspannungswechsel der Werkstückverzahnung erfolgt, kann aus der synchronen Wälzbewegung beispielsweise bei der Erzeugung der Verzahnung 2 mittels Wälzfräsens die erforderliche Phasenlage der Anfasschälräder zur Werkstückverzahnung bereits vorliegen, so daß aufgrund einer gemeinsamen Steuerung keine zusätzlichen Einmittoperationen erforderlich sind. Die Bestimmung der Höhenlage der Stirnflächen der Verzahnungen kann sensorisch erfolgen, wie oben erläutert auch außerhalb der Bearbeitungsstation.

In Fig. 3 ist die E1-Ebene die X, Z-Ebene, während die E2-Ebene die Y, Z-Ebene ist und die Verbindungslinie zwischen den Mitten von Verzahnung 2 und Anfasschälrad 15 (19) entlang der radialen Positionierachse X läuft.

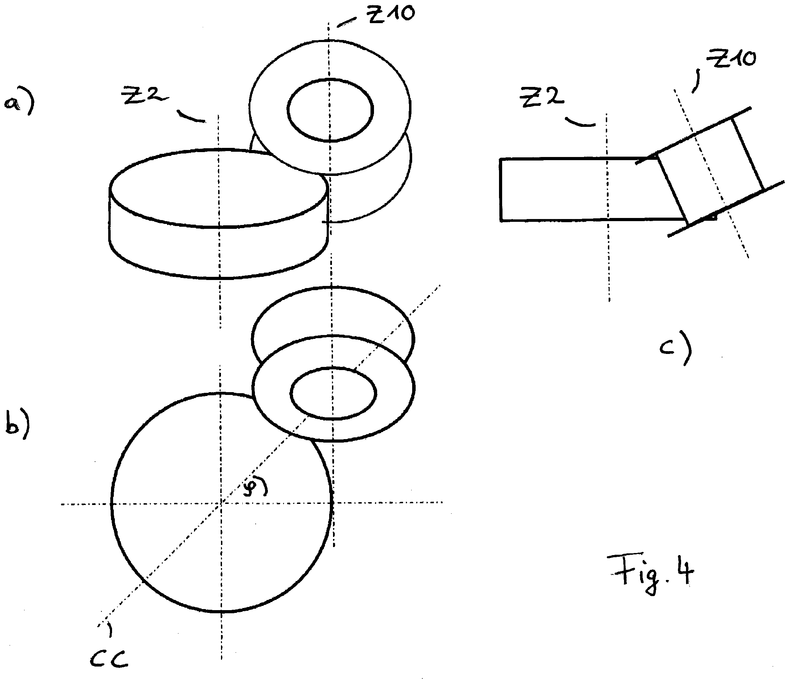

In der in Fig. 4 gezeigten Verfahrensvariante ist das Anfasschälwerkzeug mit seiner Werkzeugmitte gegenüber der Variante von Fig. 3 aus der Ebene E1 heraus verschoben (Offset Y) und gegebenenfalls durch weitere Offset-Beträge X, Z verschoben. Dann definieren die Verbindungslinie CC zwischen Werkstückmitte und Werkzeugmitte sowie die Werkstückachse eine mit der Ebene E1 einen Winkel ϕ einschließende Ebene E3. Die in E2 verlaufende Werkzeugachse Z10 liegt dann nicht mehr in einer durch die Werkzeugmitte gehenden Normalenebene E4 zu CC, sondern ist dazu geneigt (zusätzlicher Kippwinkel). Es soll z.B. weiterhin (bei gradverzahnten Anfasschälrädern) mit dem Schrägungswinkel β_{C} (für Anfasschälrad 15) bzw. β_{B} (für Anfasschälrad 19) gearbeitet werden. Der an der Schwenkachse A10 einzustellende Schwenkwinkel entspricht dann nicht mehr dem Schrägungswinkel β_{C} (bzw. β_{B}), sondern ist im Sinne einer Projektion modifiziert (bei Grundeinstellung: tan Σ' = cos ϕ tan Σ). Die Maschinenachskonfiguration mit einem von Null verschiedenen Kippwinkel erhöht die Variabilität des Verfahrens und sorgt aufgrund der Änderung in der Schnittrichtung für zusätzliche Möglichkeiten, die Fasenbildung zu beeinflussen, ohne daß dazu eine zusätzliche Schwenkachse erforderlich wäre (der Offset genügt).

Die Erfindung ist nicht auf die in der voranstehenden Figurenbeschreibung angegebenen spezifischen Merkmale eingeschränkt.

## Patentansprüche

1. Verfahren zum Bearbeiten einer Verzahnung (2), bei dem man zur Bildung einer Fase (5) an einer zwischen einer Stirnseite (6) der Verzahnung und einer zu einer Zahnlücke (4) der Verzahnung gehörigen Zahnflanke ausgebildeten Zahnkante mit einem mit einer Schneidkante versehenen Bearbeitungswerkzeug (15) in einem Bearbeitungseingriff schneidend Material von der Zahnkante abnimmt, wobei
das Bearbeitungswerkzeug verzahnt ist und der Bearbeitungseingriff ein unter einem Achskreuzwinkel (Σ) zwischen den Rotationsachsen (Z10, Z2) des Bearbeitungswerkzeugs und der Verzahnung erfolgender wälzender Bearbeitungseingriff ist, welcher sich nicht über den Zahngrundbereich der Zahnlücke hinaus erstreckt,
**dadurch gekennzeichnet, dass** man aus vorgegebenen Fasenparametern für die Fase betreffend deren Größe und deren Orientierung zur Stirnseite sowie aus Verzahnungsparametern der zu bearbeitenden Verzahnung betreffend deren Profil und gegebenenfalls Schrägungswinkel erste Verzahnungsdaten einer ersten Ersatzverzahnung (B) bestimmt, deren Schrägungswinkel durch die Orientierung der Fase (5) bestimmt ist und deren Stirnschnittprofil mit dem der zu bearbeitenden Verzahnung im Übergang (8) von der Zahnflanke in die zu bildende Fase der Zahnkante übereinstimmt,
und dass die Auslegung des Bearbeitungswerkzeuges in Abhängigkeit von den ersten Verzahnungsdaten vorgenommen wird und das Bearbeitungswerkzeug ein zur Erzeugung der ersten Ersatzverzahnung durch Wälzschälen ausgelegtes Schälrad (15) ist.

2. Verfahren nach Anspruch 1, bei dem eine Fase (9) an der anderen Zahnkante derselben Zahnlücke (4) an derselben Stirnseite (6) ebenfalls erzeugt wird, aber in einem nachfolgenden anderen Bearbeitungseingriff.

3. Verfahren nach Anspruch 1 oder 2, bei der der andere Bearbeitungseingriff mit einem anderen Bearbeitungswerkzeug (19) vorgenommen wird.

4. Verfahren nach einem der vorhergehenden Ansprüche, bei dem der andere Bearbeitungseingriff unter einem anderen Achskreuzwinkel ausgeführt wird.

5. Verfahren nach einem der Ansprüche 1 bis 4, bei dem man aus vorgegebenen Fasenparametern für die Fase betreffend deren Größe und deren Orientierung zur Stirnseite sowie aus Verzahnungsparametern der zu bearbeitenden Verzahnung betreffend deren Profil und gegebenenfalls Schrägungswinkel zweite Verzahnungsdaten einer zweiten Ersatzverzahnung (C) bestimmt, deren Schrägungswinkel durch die Orientierung der Fase (9) bestimmt ist und deren Stirnschnittprofil mit dem der zu bearbeitenden Verzahnung im Übergang von der Zahnflanke in die andere zu bildende Fase der Zahnkante übereinstimmt.

6. Verfahren nach Anspruch 5, bei dem die Auslegung des anderen Bearbeitungswerkzeuges in Abhängigkeit von den zweiten Verzahnungsdaten vorgenommen wird und das andere Bearbeitungswerkzeug insbesondere ein zur Erzeugung der zweiten Ersatzverzahnung durch Wälzschälen ausgelegtes Schälrad (19) ist.

7. Verfahren nach einem der vorhergehenden Ansprüche, bei dem das Bearbeitungswerkzeug und das andere Bearbeitungswerkzeug eine gemeinsame, insbesondere um mehr als 180° verschwenkbare Rotationsachse (Z10) aufweisen.

8. Verfahren nach einem der vorhergehenden Ansprüche, bei dem das Bearbeitungswerkzeug und/oder das andere Bearbeitungswerkzeug als geradverzahntes Schälrad ausgebildet ist/sind.

9. Verfahren nach einem der vorhergehenden Ansprüche, bei dem der Achskreuzwinkel des Bearbeitungswerkzeugs/des anderen Bearbeitungswerkzeugs auf den Schrägungswinkel (β_{B}, β_{C}) der ersten/zweiten Ersatzverzahnung eingestellt wird/werden.

10. Verfahren nach einem der vorhergehenden Ansprüche, bei dem ein von Null verschiedener Kippwinkel zwischen der Rotationsachse des Bearbeitungswerkzeugs und einer orthogonal zur Verbindungsrichtung zwischen den Zentren von Verzahnung und Bearbeitungswerkzeug stehenden Ebene eingestellt wird, insbesondere mittels eines Offsets in der orthogonal zur Verzahnungsachse stehenden Ebene.

11. Werkzeuganordnung (10) zur Bildung einer Fase (5; 9) an den zwischen einer Stirnseite einer Verzahnung und deren Zahnflanken ausgebildeten Zahnkanten, **dadurch gekennzeichnet, dass** sie ein erstes für die Maschinenachs- und Schneidkinematik des Wälzschälens ausgelegtes verzahntes Schälrad (15), dessen Rotationsachse (Z10) verschwenkbar ist, zur Bildung der Fase (5) an einer Seite der Zahnlücke (4) der Verzahnung und ein zweites für die Maschinenachs- und Schneidkinematik des Wälzschälens ausgelegtes verzahntes Schälrad (19) mit derselben Rotationsachse (Z10) zur Bildung der Fase (9) an der anderen Seite der Zahnlücke (4) aufweist.

12. Werkzeuganordnung (10) nach Anspruch 11, bei der die Rotationsachse (Z10) um mehr als 180° verschwenkbar ist.

13. Werkzeuganordnung nach Anspruch 11 oder 12, bei der das erste und/oder das zweite Bearbeitungswerkzeug (15; 19) geradverzahnt ist.

14. Werkzeuganordnung nach einem der Ansprüche 11 bis 13, bei der das erste/zweite Bearbeitungswerkzeug in Form eines zylindrischen Schälrads (15; 19) gebildet ist, sich die Kopfkreisdurchmesser der Werkzeuge um nicht mehr als 15%, bevorzugt nicht mehr als 10%, insbesondere nicht mehr als 5% unterscheiden, die Bearbeitungswerkzeuge ohne Spanbrustwinkel gebildet sind, und/oder die Bearbeitungswerkzeuge ohne Hinterschliff gebildet sind.

15. Werkzeuganordnung nach einem der Ansprüche 11 bis 14, mit einem insbesondere zwischen den Bearbeitungswerkzeugen angreifenden gemeinsamen Antrieb für beide Bearbeitungswerkzeuge.

16. Werkzeuganordnung nach einem der Ansprüche 11 bis 15, bei der eine Spanfläche der Bearbeitungswerkzeuge insbesondere direkte Anlagefläche auf der Werkzeugspindel ist.

17. Werkzeuganordnung nach einem der Ansprüche 11 bis 16, bei der die Brustseite mit den Schneidkanten der Bearbeitungswerkzeuge einander zugewandt oder voneinander abgewandt sind, insbesondere einander zugewandt.

18. Anfasstation mit einer Werkzeuganordnung (10) nach einem der Ansprüche 11 bis 17, mit wenigstens einer, bevorzugt wenigstens zwei, insbesondere wenigstens drei linear unabhängigen linearen Maschinenachsen (X, Y, Z) zur Positionierung der Werkzeuganordnung bezüglich einer Werkstückposition.

19. Verzahnungsmaschine mit einer Werkstückspindel zur drehend antreibbaren Aufnahme eines Werkstückes, einem Primärwerkzeug zur Erzeugung einer Verzahnung (2) an dem Werkstück, und einer Maschinenachse (A10) zur Einstellung eines Achskreuzwinkels zwischen einem verzahnten Bearbeitungswerkzeug (15; 19) zur Bildung einer Fase (5; 9) an einer zwischen einer Stirnseite (62) der Verzahnung und einer zu einer Zahnlücke (4) der Verzahnung gehörigen Zahnflanke ausgebildeten Zahnkante,
**gekennzeichnet durch** eine Steuereinrichtung, die dazu programmiert ist, auf der Verzahnungsmaschine ein Verfahren nach einem der Ansprüche 1 bis 10 ablaufen zu lassen, und/oder durch eine Anfasstation nach Anspruch 18.

## Claims

1. A method for machining a toothing (2), wherein, to form a chamfer (5) on a tooth edge formed between a front face (6) of the toothing and a tooth flank belonging to a tooth space (4) of the toothing, material is removed from the tooth edge by cutting, by means of a machining tool (15) equipped with a cutting edge, in a machining operation,
wherein the machining tool is toothed, and the machining operation is a skiving machining operation at an axis intersection angle (Σ) between the axes of rotation (Z10, Z2) of the machining tool and the toothing, which operation does not extend beyond the tooth root section of the tooth space,
**characterised in that** first toothing data of a first equivalent toothing (B), whose helix angle is determined by the orientation of the chamfer (5) and whose transverse section profile matches that of the toothing being machined in the transition (8) from the tooth flank into the tooth edge chamfer being formed, is determined from predetermined chamfer parameter relating to the size of the chamfer and its orientation to the front face, as well as from toothing parameters relating to the profile of the toothing being machined and, where applicable, its helix angle,
and **in that** the machining tool is configured according to the first toothing data and consists in a skiving wheel (15) designed to generate the first equivalent toothing by means of power skiving.

2. The method according to claim 1, wherein a chamfer (9) on the other tooth edge of the same tooth space (4) is also generated on the same front face (6), but in another, subsequent machining operation.

3. The method according to claim 1 or 2, wherein the other machining operation is carried out with another machining tool (19).

4. The method according to one of the preceding claims, wherein the other machining operation is executed at a different axis intersection angle.

5. The method according to one of claims 1 to 4, wherein second toothing data of a second equivalent toothing (C), whose helix angle is determined by the orientation of the chamfer (9) and whose transverse section profile matches that of the toothing being machined in the transition from the tooth flank into the other tooth edge chamfer being formed, is determined from predetermined chamfer parameters relating to the size of the chamfer and its orientation to the front face, as well as from toothing parameters relating to the profile of the toothing being machined and, where applicable, its helix angle.

6. The method according to claim 5, wherein the other machining tool is configured according to the second toothing data, and the other machining tool consists in particular in a skiving wheel (19) designed to generate the second equivalent toothing by means of power skiving.

7. The method according to one of the preceding claims, wherein the machining tool and the other machining tool have a shared axis of rotation (Z10) which can pivot in particular by more than 180°.

8. The method according to one of the preceding claims, wherein the machining tool and/or the other machining tool is/are designed as a straight-toothed skiving wheel.

9. The method according to one of the preceding claims, wherein the axis intersection angle of the machining tool and/or the other machining tool is set to the helix angle (β_{B}, β_{C}) of the first and/or second equivalent toothing.

10. The method according to one of the preceding claims, wherein a non-zero tilt angle is set between the axis of rotation of the machining tool and a plane which is orthogonal to the connecting direction between the centres of the toothing and the machining tool, in particular by means of an offset in the plane which is orthogonal to the toothing axis.

11. A tool arrangement (10) for forming a chamfer (5; 9) on the tooth edges formed between a front face of a toothing and its tooth flanks, **characterised in that** it has a first toothed skiving wheel (15) designed for the machine axis and cutting kinematics for power skiving, the axis of rotation (Z10) of which can be pivoted to form the chamfer (5) on one side of the tooth space (4) of the toothing; and **in that** it has a second toothed skiving wheel (19) designed for the machine axis and cutting kinematics for power skiving with the same axis of rotation (Z10) to form the chamfer (9) on the other side of the tooth space (4).

12. The tool arrangement (10) according to claim 11, wherein the axis of rotation (Z10) can be pivoted by more than 180°.

13. The tool arrangement according to claim 11 or 12, wherein the first and/or second machining tools (15; 19) has/have straight teeth.

14. The tool arrangement according to one of claims 11 to 13, wherein the first and/or second machining tool is/are made in the form of a cylindrical skiving wheel (15; 19), the crown circle diameters of the tools do not differ by more than 15%, preferably by not more than 10%, in particular by no more than 5%, the machining tools are formed without a cutting face angle, and/or the machining tools are formed without relief grinding.

15. The tool arrangement according to one of claims 11 to 14 having a shared drive for both machining tools, engaging in particular between the machining tools.

16. The tool arrangement according to one of claims 11 to 15, wherein a cutting surface of the machining tools is in particular a direct contact surface on the tool spindle.

17. The tool arrangement according to one of claims 11 to 16, wherein the front sides with the cutting edges of the machining tools face each other or face away from each other, but in particular face each other.

18. A chamfering station comprising a tool arrangement (10) according to one of claims 11 to 17 having at least one, preferably at least two, particularly preferably three linearly independent linear machine axes (X, Y, Z) for positioning the tool arrangement with respect to a workpiece position.

19. A toothing machine comprising a workpiece spindle for receiving a workpiece in a manner allowing rotary drive; a primary tool for generating a toothing (2) on the workpiece; and a machine axis (A10) for setting an axis intersection angle between a toothed machining tool (15; 19) for forming a chamfer (5; 9) on a tooth edge formed between a front face (62) of the toothing and a tooth flank belonging to a tooth space (4),
**characterised by** a control device which is programmed to allow a method according to one of claims 1 to 10 to be executed on the toothing machine, and/or to allow this method to be carried out by a chamfering station according to claim 18.

## Revendications

1. Procédé d'usinage d'une denture (2), dans lequel, pour former un chanfrein (5) sur une arête de dent conçue entre une face avant (6) de la denture et un flanc de dent appartenant à un entredent (4) de la denture, on retire de la matière de ladite arête de dent par taillage à l'aide d'un outil d'usinage (15) doté d'une arête de coupe en une prise d'usinage, étant entendu que :
l'outil d'usinage est denté et la prise d'usinage est une prise d'usinage de skiving qui se produit selon un angle d'intersection (Σ) entre les axes de rotation (Z10, Z2) de l'outil d'usinage et de la denture et qui ne dépasse pas de la partie de fond de dent de l'entredent,
**caractérisé en ce qu'**on détermine des premières données de denture concernant une première denture virtuelle (B) à partir de paramètres de chanfrein prédéfinis concernant la taille et l'orientation du chanfrein par rapport à la face avant et à partir de paramètres de denture concernant le profil de la denture à usiner et éventuellement son angle d'inclinaison, l'angle d'inclinaison de ladite première denture virtuelle étant déterminé par l'orientation du chanfrein (5) et son profil de section transversal coïncidant avec celui de la denture à usiner au niveau de la transition (8) entre le flanc de dent et le chanfrein de l'arête de dent à former,
et **en ce que** la conception de l'outil d'usinage est fonction des premières données de denture et l'outil d'usinage consiste en une roue de taillage (15) conçue pour produire la première denture virtuelle par power skiving.

2. Procédé selon la revendication 1, dans lequel un chanfrein (9) est également produit sur l'autre arête de dent du même entredent (4) sur la même face avant (6), mais dans une autre prise d'usinage ultérieure.

3. Procédé selon la revendication 1 ou 2, dans lequel l'autre prise d'usinage est réalisée avec un autre outil d'usinage (19).

4. Procédé selon l'une quelconque des revendications précédentes, dans lequel l'autre prise d'usinage s'effectue selon un autre angle d'intersection d'axes.

5. Procédé selon l'une des revendications 1 à 4, dans lequel on détermine des deuxièmes données de denture concernant une deuxième denture virtuelle (C) à partir de paramètres de chanfrein prédéfinis concernant la taille et l'orientation du chanfrein par rapport à la face avant et à partir de paramètres de denture concernant le profil de la denture à usiner et éventuellement son angle d'inclinaison, l'angle d'inclinaison de ladite deuxième denture virtuelle étant déterminé par l'orientation du chanfrein (9) et son profil de section transversal coïncidant avec celui de la denture à usiner au niveau de la transition entre le flanc de dent et l'autre chanfrein de l'arête de dent à former.

6. Procédé selon la revendication 5, dans lequel la conception de l'autre outil d'usinage est fonction des deuxièmes données de denture et l'autre outil d'usinage consiste notamment en une roue de taillage (19) conçue pour produire la deuxième denture virtuelle par power skiving.

7. Procédé selon l'une quelconque des revendications précédentes, dans lequel l'outil d'usinage et l'autre outil d'usinage présentent un axe de rotation (Z10) commun, notamment pivotant de plus de 180°.

8. Procédé selon l'une quelconque des revendications précédentes, dans lequel l'outil d'usinage et/ou l'autre outil d'usinage sont conçus sous la forme de roues de taillage à denture droite.

9. Procédé selon l'une quelconque des revendications précédentes, dans lequel l'angle d'intersection d'axes de l'outil d'usinage et/ou de l'autre outil d'usinage est réglé sur l'angle d'inclinaison (β_{B}, β_{C}) de la première et/ou de la deuxième denture virtuelle.

10. Procédé selon l'une quelconque des revendications précédentes, dans lequel un angle de basculement non nul est réglé entre l'axe de rotation de l'outil d'usinage et un plan orthogonal au sens de liaison entre les centres de la denture et de l'outil d'usinage, notamment au moyen d'un déport dans le plan orthogonal à l'axe de la denture.

11. Ensemble formant outil (10) permettant de former un chanfrein (5 ; 9) sur les arêtes de dent conçues entre une face avant d'une denture et ses flancs de dent, **caractérisé en ce que** l'ensemble présente une première roue de taillage (15) dentée conçue pour la cinématique des axes machine et de coupe d'une opération de power skiving, l'axe de rotation (Z10) de ladite roue de taillage pouvant pivoter pour former le chanfrein (5) sur un côté de l'entredent (4) de la denture, et **en ce que** l'ensemble présente une deuxième roue de taillage (19) dentée conçue pour la cinématique des axes machine et de coupe de l'opération de power skiving avec le même axe de rotation (Z10) pour former le chanfrein (9) sur l'autre côté de l'entredent (4).

12. Ensemble formant outil (10) selon la revendication 11, dans lequel l'axe de rotation (Z10) peut pivoter de plus de 180°.

13. Ensemble formant outil selon la revendication 11 ou 12, dans lequel le premier et/ou le deuxième outil d'usinage (15 ; 19) sont à denture droite.

14. Ensemble formant outil selon l'une des revendications 11 à 13, dans lequel le premier et/ou le deuxième outil d'usinage ont la forme d'une roue de taillage cylindrique (15 ; 19), les diamètres du cercle de tête des outils ne diffèrent pas de plus de 15 %, de préférence pas de plus de 10 %, notamment pas de plus de 5 %, les outils d'usinage étant conçus sans angle de face de coupe et/ou sans dépouille.

15. Ensemble formant outil selon l'une des revendications 11 à 14, comprenant un dispositif d'entraînement commun aux deux outils d'usinage et intervenant notamment entre lesdits outils d'usinage.

16. Ensemble formant outil selon l'une des revendications 11 à 15, dans lequel une surface de coupe des outils d'usinage consiste notamment en une surface de contact direct sur la broche de l'outil.

17. Ensemble formant outil selon l'une des revendications 11 à 16, dans lequel les côtés de face présentant les arêtes de coupe des outils d'usinage sont tournés l'un vers l'autre ou détournés l'un de l'autre, en étant notamment tournés l'un vers l'autre.

18. Poste de chanfreinage comprenant un ensemble formant outil (10) selon l'une des revendications 11 à 17, présentant au moins un, de préférence au moins deux, et notamment au moins trois axes machine linéaires (X, Y, Z) linéairement indépendants pour le positionnement de l'ensemble formant outil par rapport à la position d'une pièce à usiner.

19. Machine à tailler les dentures comprenant une broche de pièce à usiner destinée à recevoir une pièce à usiner destinée à être mise en rotation, un outil primaire destiné à produire une denture (2) sur la pièce à usiner, et un axe machine (A10) destiné à régler un angle d'intersection d'axes entre un outil d'usinage denté (15 ; 19) pour former un chanfrein (5 ; 9) sur une arête de dent conçue entre une face avant (62) de la denture et un flanc de dent appartenant à un entredent (4) de la denture,
**caractérisé par** une unité de commande programmée pour faire exécuter un procédé selon l'une des revendications 1 à 10 sur la machine à tailler les dentures, et/ou sur un poste de chanfreinage selon la revendication 18.
